# EUROPÄISCHE PATENTANMELDUNG

(11) **EP 3 651 121 A1**
(43) Veröffentlichungstag der Anmeldung: **13.05.2020**
(21) Anmeldenummer: 18205320.7
(22) Anmeldetag: 09.11.2018
(51) Int. Cl.: G06T 11/20, G06F 16/901, G06N 7/00, G06N 20/00, G06F 3/0484

(54) **ASSISTENZSYSTEM ZUR ANALYSE EINES TRAINIERTEN KAUSALEN NETZES**

(71) Anmelder: Siemens Aktiengesellschaft, 80333 München (DE)
(72) Erfinder: Meunier, Regine, 81371 München (DE); Mlynek, Jonas, 10965 Berlin (DE); Hapfelmeier, Andreas, 82054 Sauerlach (DE)

(57) **Zusammenfassung**

Die Erfindung beschreibt ein Assistenzsystem zur Analyse eines trainierten kausalen Netzes (BAN), in dem Knoten (N) Variablen, die ein Ereignis repräsentieren, und Kanten (K) bedingte Abhängigkeiten zwischen den Variablen beschreiben. Jedem Knoten (N) des Netzes ist eine bedingte Wahrscheinlichkeitsverteilung der durch ihn repräsentierten Variable, die Variablen an Elternknoten (EN) zuordnet, zugeordnet, wobei Elternknoten (EN) eines Knotens (N) diejenigen Knoten (N) sind, von denen eine Kante (K) zu diesem Knoten (N) führt. Das Assistenzsystem umfasst eine interaktive Visualisierungskomponente (120), die dazu ausgebildet ist, das kausale Netz (BAN) auf einer Ausgabeeinheit als Graph mit den Knoten (N) und den Kanten (K) mit einer die Abhängigkeit beschreibenden Richtungsangabe darzustellen. Ferner wird in Reaktion auf eine Nutzereingabe, mit der eine Anzahl an Knoten (N) durch das Setzen einer Anzahl an Evidenzen ausgewählt und/oder eine Anzahl an Kanten (K) durch Hinzufügen oder Entfernen verändert wird, die Darstellung des kausalen Netzes (BAN) derart verändert, dass der oder die Knoten (N), deren Wahrscheinlichkeit des Eintretens eines Ereignisses sich durch die Anzahl an gesetzten Evidenzen und/oder die Veränderung der Anzahl an Kanten (K) verändert, als betroffene Knoten (BN) visuell hervorgehoben dargestellt wird.

## Beschreibung

Die Erfindung betrifft ein Assistenzsystem zur Analyse eines trainierten kausalen Netzes, in dem Knoten Variablen, die ein Ereignis repräsentieren, und Kanten bedingte Abhängigkeiten zwischen den Variablen beschreiben. Jedem Knoten des Netzes ist eine bedingte Wahrscheinlichkeitsverteilung der durch ihn repräsentierten Variable, die Variablen an Elternknoten zuordnet, zugeordnet. Die Elternknoten eines Knotens sind diejenigen Knoten, von denen eine Kante zu diesem Knoten führt.

Kausale Netze werden in Verbindung mit Wahrscheinlichkeitsverteilungen auch als Bayessche Netze bezeichnet. Diese werden auf dem Gebiet des Maschinellen Lernens zur Berechnung von Eintrittswahrscheinlichkeiten von bestimmten Ereignissen genutzt. Kausale Netze werden besonders dann eingesetzt, wenn die Eintrittswahrscheinlichkeit eines Ereignisses von vorausgehenden Ereignissen abhängt.

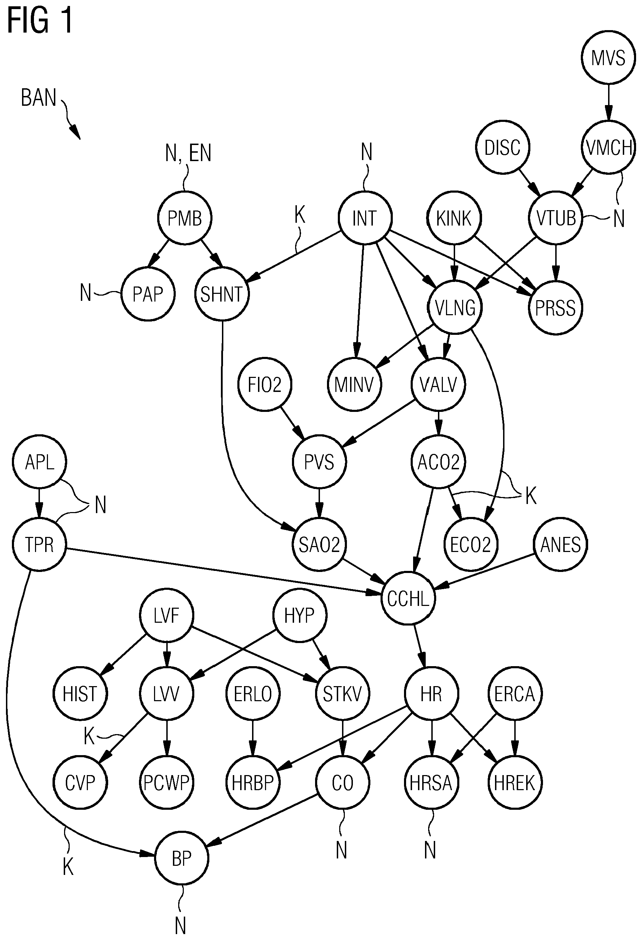

Ein Beispiel eines kausalen Netzes BAN ist für eine Alarmkette in Figur 1 dargestellt. Das kausale Netz BAN umfasst eine Vielzahl an kreisförmigen Knoten N, die jeweils ein Ereignis repräsentieren, und Kanten K, die eine Abhängigkeit zwischen jeweils zwei Ereignissen bzw. Knoten N repräsentieren. Die als Pfeile dargestellten Kanten K geben dabei eine Kausalität der Abhängigkeit an. In den kreisförmigen Knoten N sind jeweilige Ereignisnamen, z.B. PMB, PAP, SHNT, INT, APL, TPR, usw., dargestellt. Jedes Ereignis weist eine Grund- oder Basiswahrscheinlichkeit auf. Zum Beispiel hat das Ereignis PAP (links oben) eine Grundwahrscheinlichkeit von 0,02. Wenn am Elternknoten EN bereits das Ereignis PMB eingetreten ist, erhöht sich die Wahrscheinlichkeit des Ereignisses PAP auf 0,8. Durch das Ereignis PMB können aber auch Knoten N an weit entfernten Stellen des kausalen Netzes betroffen sein, wie sich aus dem Verfolgen der Pfeile (Kanten K) erkennen lässt. Insbesondere kann sich das Eintreten eines Ereignisses auch auf das Eintreten von anderen Ereignissen auswirken, die durch rückwärtsgerichtete Pfeile erreichbar sind.

Ein Problem liegt darin, einem Benutzer, z.B. einem Techniker, möglichst schnell eine Vorstellung davon zu geben, welche Konsequenzen aus dem Eintreten von bestimmten Ereignissen zu erwarten sind. Insbesondere wäre es für einen Benutzer wünschenswert, an dem kausalen Netz verschiedene Szenarien durchspielen zu können, um zu verstehen, welche Ereignisse von bereits eingetretenen Ereignissen betroffen sind und in welchem Maße. Weiter wäre es wünschenswert, einen Einblick in die Logik des kausalen Netzes zu bekommen und die für die Resultate entscheidenden Abhängigkeiten zu sehen, um Vertrauen zu dem Modell aufzubauen. Dieses Vertrauen ist deshalb entscheidend, weil die Abhängigkeiten nicht von einem Menschen eingegeben sind, sondern durch datengetriebene Verfahren berechnet wurden. Das Trainieren eines derartigen Modelles mit Hilfe maschinellen Lernens geschieht rein durch die statistische Analyse einer großen Menge an gespeicherten Daten.

Normalerweise hat der Benutzer keine Möglichkeit, die Wirkungsweise eines kausalen Netzes genauer zu prüfen und an seiner eigenen Erfahrung und Intuition zu spiegeln. Ebenso mangelt es an der Möglichkeit, beliebige Szenarien zu testen. Dies liegt daran, dass das kausale Netz abstrakt im Hintergrund verborgen liegt und lediglich von umgebenden IT-Systemen ansprechbar ist. Insofern sind die durch das maschinelle Lernen gewonnenen Resultate für einen Benutzer zunächst nur bedingt vertrauenswürdig, da er keine Möglichkeit hatte, die Resultate des Netzes an ihm bereits bekannten und verstandenen Szenarien zu prüfen.

Es ist Aufgabe der Erfindung, ein rechnergestütztes Assistenzsystem anzugeben, mit dem eine Analyse eines trainierten kausalen Netzes auf einfache Weise ermöglicht wird. Es ist ferner Aufgabe der Erfindung, ein rechnergestütztes Verfahren zur Analyse eines trainierten kausalen Netzes anzugeben, welches die Bestimmung von Zusammenhängen in dem kausalen Netz ermöglicht.

Diese Aufgabe wird gelöst durch ein Assistenzsystem gemäß den Merkmalen des Anspruches 1, ein Verfahren gemäß den Merkmalen des Anspruches 11 und ein Computerprogrammprodukt gemäß den Merkmalen des Anspruches 12. Vorteilhafte Ausgestaltungen ergeben sich aus den abhängigen Ansprüchen.

Gemäß einem ersten Aspekt der Erfindung wird ein Assistenzsystem zur Analyse eines trainierten kausalen Netzes vorgeschlagen. In dem kausalen Netz beschreiben Knoten Variablen, die ein Ereignis repräsentieren, und Kanten bedingte Abhängigkeiten zwischen den Variablen. Jedem Knoten des Netzes ist eine bedingte Wahrscheinlichkeitsverteilung der durch ihn repräsentierten Variablen zugeordnet, wobei die Wahrscheinlichkeitsverteilung Variablen an Elternknoten zuordnet. Elternknoten eines Knotens sind diejenigen Knoten, von denen eine Kante zu diesem Knoten führt. Das Assistenzsystem umfasst erfindungsgemäß eine interaktive Visualisierungskomponente, die dazu ausgebildet ist, das kausale Netz auf einer Ausgabeeinheit als Graph mit den Knoten und den Kanten mit einer die Abhängigkeit beschreibenden Richtungsangabe darzustellen. Die interaktive Visualisierungskomponente ist darüber hinaus dazu ausgebildet, in Reaktion auf eine Nutzereingabe, mit der eine Anzahl an Knoten durch das Setzen einer Anzahl an Evidenzen ausgewählt und/oder eine Anzahl an Kanten durch Hinzufügen oder Entfernen verändert wird, die Darstellung des kausalen Netzes derart verändert wird, dass der oder die Knoten, deren Wahrscheinlichkeit des Eintretens eines Ereignisses sich durch die Anzahl an gesetzten Evidenzen und/oder die Veränderung der Anzahl an Kanten verändert, als betroffene Knoten visuell hervorgehoben dargestellt wird.

Das Assistenzsystem ermöglicht eine Interaktion mit dem kausalen Netz, indem Knoten durch das Setzen einer Evidenz ausgewählt werden können. Eine Evidenz ist die Kenntnis über das Eintreten eines Ereignisses. Alternativ oder zusätzlich kann eine, zwei Knoten verbindende, Kante hinzugefügt oder entfernt werden, um das kausale Netz gezielt zu verändern. In Reaktion auf eine derartige Nutzereingabe, die mittels eines herkömmlichen Eingabemittels, z.B. eines Zeigegeräts (z.B. Maus oder Trackpad) oder durch Interaktion mit einem Touchscreen erfolgen kann, wird die Darstellung des kausalen Netzes in Folge der sich durch die Veränderung ergebenden Wahrscheinlichkeiten anders dargestellt. Dabei werden insbesondere nur solche Knoten visuell hervorgehoben dargestellt, bei denen sich eine Wahrscheinlichkeit des Eintretens eines Ereignisses durch die Veränderung ergibt. Die interaktive Visualisierungskomponente stellt dadurch einen direkten Zusammenhang zwischen einer Benutzer-Schnittstelle und dem, dem kausalen Netz zugrunde liegenden Modell her. Dadurch werden Modellabfragen für einen Benutzer nachvollziehbar und das Modell kann verstanden werden. Dies ist vorteilhaft, da kausale Netze wegen ihrer intrinsischen logischen Beziehungen prädestiniert sind, die den Modellresultaten zugrunde liegenden Abhängigkeiten interaktiv und graphisch erkennbar zu machen.

Gemäß einer zweckmäßigen Ausgestaltung umfasst das Assistenzsystem eine Inferenzkomponente, die dazu ausgebildet ist, die Auswirkungen des Setzens einer Anzahl an Evidenzen auf die Wahrscheinlichkeiten des Eintretens anderer Ereignisse zu ermitteln. Die Inferenzkomponente, die von herkömmlichen Lern- und Inferenzsystemen bekannt ist, dient dazu, mit Daten zu aktuell beobachteten Ereignissen Wahrscheinlichkeiten von anderen Ereignissen zu berechnen. Mit anderen Worten übernimmt die Interferenzkomponente eine Schlussfolgerung, die sich aufgrund der Wahrscheinlichkeiten der Knoten in Folge des Setzens von Evidenzen und/oder des Veränderns von Abhängigkeiten ergibt. Die Inferenzkomponente wird dabei durch das Erfassen der Nutzereingabe getriggert, da jede durch eine Nutzereingabe hervorgerufene Evidenz und/oder Veränderung einer Abhängigkeit den Ablauf der Inferenzkomponente startet, wodurch sich ein verändertes kausales Netz mit veränderten Wahrscheinlichkeiten ergibt.

Eine weitere zweckmäßige Ausgestaltung sieht vor, dass die visuell hervorgehobene Darstellung eine farbliche Markierung des oder der betroffenen Knoten umfasst, wobei die farbliche Markierung abhängig ist von einem Absolutwert der Höhe der Wahrscheinlichkeit oder von der Höhe der Änderung der Wahrscheinlichkeit des betroffenen Knotens. Der Einfluss des Eintretens einer Evidenz auf andere Knoten bzw. Ereignisse wird somit durch eine farbliche Codierung der Knoten dargestellt. Insbesondere können, um die Nachvollziehbarkeit für einen Nutzer zu erhöhen, ausgewählte Knoten und/oder veränderte Kanten auf eine andere Weise visuell hervorgehoben dargestellt sein als diejenigen Knoten, deren Wahrscheinlichkeit des Eintretens einer Wahrscheinlichkeit sich durch die Anzahl an gesetzten Evidenzen und/oder die Veränderung der Anzahl an Kanten nicht oder kaum verändert hat.

Eine weitere zweckmäßige Ausgestaltung sieht vor, dass die visuell hervorgehobene Darstellung des oder der betroffenen Knoten eine Textinformation zur Höhe der Wahrscheinlichkeit der betreffenden Variablen des betroffenen Knotens umfasst. Insbesondere umfasst die Wahrscheinlichkeit eine Basiswahrscheinlichkeit, eine neu berechnete Wahrscheinlichkeit und eine Unterschiedswahrscheinlichkeit, die sich aus einer Differenz zwischen der neu berechneten Wahrscheinlichkeit und der Basiswahrscheinlichkeit ergibt. Die genannten Wahrscheinlichkeiten ermöglichen einen Rückschluss auf das dem kausalen Netz zugrunde liegende Modell sowie ein Verständnis des Verhaltens.

Gemäß einer weiteren zweckmäßigen Ausgestaltung ist die interaktive Visualisierungskomponente dazu ausgebildet, in Reaktion auf eine Nutzereingabe, mit der eine Anzahl an Knoten durch das Setzen einer Anzahl an Evidenzen ausgewählt wird, die zum Lernen des kausalen Netzes verwendeten Daten darzustellen. Insbesondere kann die interaktive Visualisierungskomponente dazu ausgebildet sein, die Daten, die beim Lernen des kausalen Netzes zum Hinzufügen von Kanten zwischen der Anzahl an ausgewählten Knoten geführt haben, darzustellen.

Die Daten können solche Daten umfassen, die einen Zusammenhang zwischen der Anzahl an ausgewählten Knoten aufweisen. Ein solcher Zusammenhang kann eine Anzahl oder Prozentzahl der Daten, die den Zusammenhang enthalten, oder eine Tabelle der Daten, in denen dieser Zusammenhang auftritt, enthalten. Insbesondere dient diese Ausgestaltung zur Anzeige solcher Daten, die zum Hinzufügen von Kanten zwischen zwei Knoten geführt haben. Auch hierdurch wird das Verständnis für das dem kausalen Netz zugrunde liegende Modell für einen Benutzer verbessert.

Die interaktive Visualisierungskomponente kann ferner dazu ausgebildet sein, in Reaktion auf eine Nutzereingabe einen Ausschnitt des kausalen Netzes auf der Ausgabeeinheit darzustellen. Hierdurch wird ein Benutzer in die Lage versetzt, selektiv bestimmte Ausschnitte zu untersuchen. Insbesondere kann bei großen, komplexen kausalen Netzen mit einer großen Anzahl an Knoten die Sichtbarkeit verbessert werden.

Eine weitere Ausgestaltung sieht vor, dass die die Abhängigkeit beschreibende Richtungsangabe durch einen Pfeil visualisiert wird, wobei ein Pfeilende an einem Elternknoten und eine Pfeilspitze an dem Knoten endet, zu dem die von dem Elternknoten ausgehende Kante führt (sog. Kindknoten). Dies erleichtert die Erkennung von Abhängigkeiten, insbesondere welcher zweier durch eine Kante verbundenen Knoten der Elternknoten und welcher der Kindknoten ist.

Gemäß einem zweiten Aspekt der vorliegenden Erfindung wird ein Verfahren zur computer-implementierten Analyse eines trainierten kausalen Netzes vorgeschlagen. In dem kausalen Netz beschreiben Knoten Variablen, die ein Ereignis repräsentieren, und Kanten bedingte Abhängigkeiten zwischen den Variablen. Jedem Knoten des Netzes ist eine bedingte Wahrscheinlichkeitsverteilung der durch ihn repräsentierten Variablen, die Variablen Elternknoten zuordnet, zugeordnet. Elternknoten eines Knotens sind dabei diejenigen Knoten, von denen eine Kante zu diesem Knoten führt.

Das Verfahren umfasst den Schritt des Darstellens des kausalen Netzes auf einer Ausgabeeinheit als Graph mit den Knoten und den Kanten mit einer die Abhängigkeit beschreibenden Richtungsangabe. Das Verfahren umfasst den weiteren Schritt der Veränderung der Darstellung des kausalen Netzes in Reaktion auf eine Nutzereingabe, mit der eine Anzahl an Knoten durch das Setzen einer Anzahl an Evidenzen ausgewählt und/oder eine Anzahl an Kanten durch Hinzufügen oder Entfernen verändert wird, derart, dass der oder die Knoten, deren Wahrscheinlichkeit des Eintretens eines Ereignisses sich durch die Anzahl an gesetzten Evidenzen und/oder die Veränderung der Anzahl an Kanten verändert, als betroffene Knoten visuell hervorgehoben dargestellt wird.

Das erfindungsgemäße Verfahren weist die gleichen Vorteile auf, wie diese vorstehend in Verbindung mit dem erfindungsgemäßen Assistenzsystem beschrieben wurden.

Durch das erfindungsgemäße Verfahren können weitere Schritte des z.B. in Gestalt einer Software verwirklichten Assistenzsystems durchgeführt werden.

Gemäß einem dritten Aspekt wird ein Computerprogrammprodukt vorgeschlagen, das direkt in den internen Speicher eines digitalen Rechners geladen werden kann und Softwarecodeabschnitte umfasst, mit denen die Schritte des hierin beschriebenen Verfahrens durchgeführt werden, wenn das Produkt auf dem Rechner läuft. Das Computerprogrammprodukt kann in Gestalt eines physikalischen Datenträgers, z.B. einer CD-ROM, einer DVD, eines USB-Speichersticks und dergleichen, verkörpert sein. Ebenso kann das Computerprogrammprodukt als ein über ein drahtloses oder leitungsgebundenes Netzwerk ladbares Signal verkörpert sein.

Weitere Ausgestaltungen und Merkmale der vorliegenden Erfindung werden nachfolgend in Verbindung mit der Beschreibung der Zeichnung beschrieben. Es zeigen:
- Fig. 1: ein beispielhaftes kausales Netz, das dem R Paket bnlearn in der Referenz [1] entnommen ist;
- Fig. 2: eine schematische Darstellung eines erfindungsgemäßen Assistenzsystems, das die zur Durchführung des erfindungsgemäßen Verfahrens erforderlichen Komponenten visualisiert;
- Fig. 3: das in Fig. 1 gezeigte kausale Netz, in dem beispielhaft durch eine Nutzereingabe zwei Ereignisse selektiert sind,
- Fig. 4: eine andere Darstellung des in Fig. 1 gezeigten kausalen Netzes, in dem ein Knoten selektiert ist;
- Fig. 5: eine zu dem Knoten zugehörige Wahrscheinlichkeitstabelle; und
- Fig. 6: einen Teilausschnitt des in Fig. 1 gezeigten kausalen Netzes, bei dem eine neue Abhängigkeit zwischen zwei Knoten eingefügt ist.

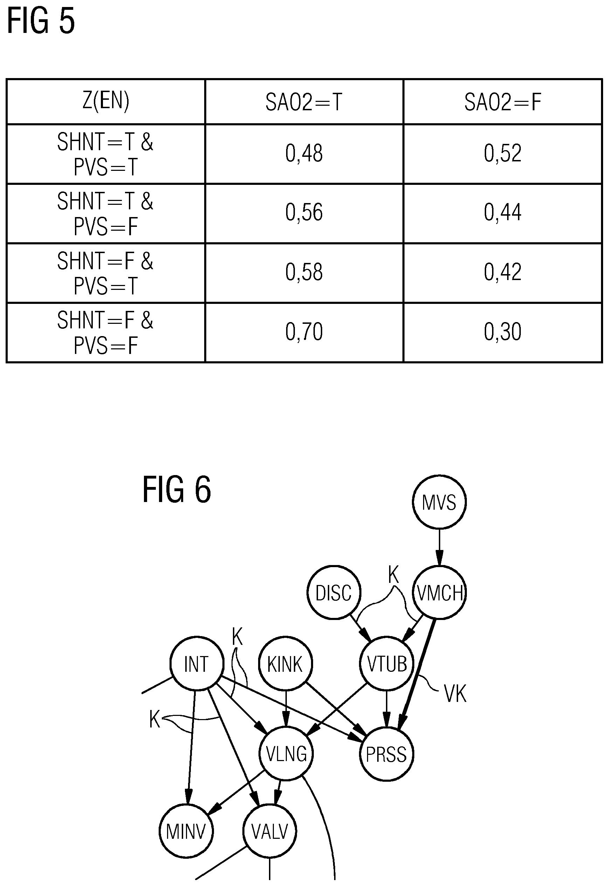

Es ist ein übliches Verfahren auf dem Gebiet des Maschinellen Lernens, aus vielen Beispielen für gemeinsam vorgekommene Ereignisse ein kausales Netz zu lernen. Ereignisse werden dabei durch Variablen und deren Ausprägungen (d.h. Werte, die die Variablen annehmen können) beschrieben. Das beispielhaft in Fig. 1 dargestellte kausale Netz BAN beschreibt den Zusammenhang zwischen den Wahrscheinlichkeiten des Eintretens von Ereignissen, also zwischen dem Auftreten von bestimmten Werten der Variablen, durch ein Netz aus Knoten N und gerichteten Kanten K. Ein Knoten N repräsentiert eine Variable, die im diskreten Fall zwei oder mehr Ausprägungen (d.h. Werte) annehmen kann. Eine Kante repräsentiert eine Abhängigkeit zwischen zwei Variablen bzw. Knoten. Ein Ereignis weist dabei einer Variablen eine ihrer möglichen Ausprägungen (Werte) zu. Jedem Knoten N, der "Eltern" hat (d.h. andere Knoten, von denen eine Abhängigkeit in Gestalt eines Pfeils auf ihn zeigt, sog. Elternknoten EN), ist eine Wahrscheinlichkeitsverteilung oder -tabelle zugeordnet, die angibt, wie wahrscheinlich jede Ausprägung der Variablen ist, die er repräsentiert, für jede Kombination der Ausprägungen seiner Variablen, die seine Elternknoten repräsentieren. Eine solche Wahrscheinlichkeitsverteilung oder -tabelle wird auch als Conditional Probability Table bezeichnet. Eine solche Wahrscheinlichkeitstabelle ist exemplarisch in Fig. 5 für den Knoten SAO2 dargestellt.

Die Struktur des kausalen Netzes BAN zu lernen ist eine komplexe Aufgabe. Es gibt dazu verschiedene Algorithmen, wie z.B. den bekannten "iamb"-Algorithmus. Die Wahrscheinlichkeiten in den jeweiligen Wahrscheinlichkeitstabellen oder -verteilungen zu jedem Knoten N ergeben sich dann z.B. mit der bekannte "Maximum Likelihood Estimation" aus den beobachteten Häufigkeiten von Ausprägungen von Variablen aus der Menge der beobachteten Ereignisse. Bei Knoten N, die keine Elternknoten EN haben, umfasst die Wahrscheinlichkeitstabelle eine einzige Zeile, die die sog. Basis- oder Grundwahrscheinlichkeiten für die Ausprägungen der Variablen auflistet. Aus der Wahrscheinlichkeitstabelle oder -verteilung lassen sich für jedes Ereignis Grundwahrscheinlichkeiten des Auftretens berechnen.

Das Wissen über die Zusammenhänge zwischen Ereignissen wird durch Algorithmen gelernt und in dem kausalen Netz BAN repräsentiert und festgehalten. Das kausale Netz BAN kann dann auf neue Situationen angewendet werden, indem die als eingetreten bekannten Ausprägungen von Variablen (die Ereignisse) als Evidenz angesehen werden und die Wahrscheinlichkeit für weitere Ausprägungen von Variablen (weitere Ereignisse) unter Annahme dieser Evidenz durch einen Algorithmus zur Inferenz auf Basis des kausalen Netzes BAN berechnet wird.

Das kausale Netz BAN zusammen mit den Wahrscheinlichkeitstabellen bzw. -verteilungen beschreibt eine globale Wahrscheinlichkeitsverteilung für die Zufallsvariablen. Der Vorteil der Darstellung auf diese Art besteht darin, dass Inferenz, also die Berechnung von Wahrscheinlichkeiten für Ereignisse unter der Annahme, dass bestimmte Ereignisse schon beobachtet wurden (englisch: conditional probabilities), durch Betrachtung lokaler Wahrscheinlichkeitsverteilungen möglich ist. Es gibt Algorithmen für die exakte Berechnung als auch für die approximative Berechnung von Ereigniswahrscheinlichkeiten. Eine approximative Berechnung ist mit Hilfe von Monte Carlo-Simulationen möglich, wobei entweder das bekannte "Rejection Sampling" oder "Likelihood Waiting" eingesetzt werden kann. Bei einer großen Anzahl von Knoten N ist die approximative Berechnung von Vorteil.

Das beschriebene Vorgehen kann in verschiedensten Anwendungen zur Anwendung gelangen. Ein mögliches Anwendungsgebiet sind Alarmsysteme, wie dieses dem kausalen Netz in Fig. 1 zugrunde liegt. Die Beispiele, aus denen gelernt wird, sind Mengen von Ereignissen, wobei die Ereignisse sowohl Alarmmeldungen als auch die diagnostizierte Vorfälle bzw. Fehler sind. Das Wissen über die Zusammenhänge wird gelernt und in einem kausalen Netz gespeichert. Wenn in einer neuen Situation Alarme auftreten, können mit Hilfe des kausalen Netzes die Wahrscheinlichkeiten für bestimmte Vorfälle bzw. Fehler, die als Ereignisse im kausalen Netz vorkommen, berechnet und verglichen werden.

Ebenso ist eine Analyse von Einkaufsverhalten von Nutzern möglich. In diesem Fall wird der Kauf eines Produkts als Ereignis angesehen und eine Menge von mehreren Produkten, die zusammen gekauft wurden, stellt ein Trainingsbeispiel dar. Das kausale Netz BAN repräsentiert die Abhängigkeit zwischen Einkäufen von mehreren Produkten. Wenn ein neuer Einkauf getätigt wird, kann durch die bereits eingetretenen Einkäufe der Produkte, die schon im Warenkorb liegen, für weitere Produkte eine Wahrscheinlichkeit des Kaufs angegeben werden. Eine hohe Wahrscheinlichkeit des Kaufs ergibt sich daraus, dass viele andere Kunden die Produkte gemeinsam gekauft haben. Daher ist es zweckmäßig, dem aktuellen Kunden den Kauf von zusätzlichen Produkten, die eine hohe Wahrscheinlichkeit aufweisen, vorzuschlagen. Eigenschaften des Kunden können als zusätzliche Variable in den Wahrscheinlichkeitsraum aufgenommen werden. Auf diese Weise kann eine Abhängigkeit der Wahrscheinlichkeit, z.B. vom Alter eines privaten Kunden oder von der Zugehörigkeit eines Firmenkunden zu einer bestimmten Branche, berücksichtigt werden.

Diese Vorgehensweisen sind bekannt und werden in verschiedensten Anwendungen verwendet. Eine Problematik der Verwendung eines trainierten kausalen Netzes BAN besteht darin, dass das Wissen, das in ihnen steckt, für einen Analysten des entsprechenden Fachgebietes nicht nachvollziehbar ist.

Die Aufgabe solcher Systeme besteht in den Angaben der Wahrscheinlichkeiten für Ereignisse. Warum die Wahrscheinlichkeiten in einer bestimmten Situation, d.h. bei Kenntnis einer Teilmenge der Ausprägung von Variablen wie hoch sind bzw. warum sie von den Grund- bzw. Basiswahrscheinlichkeiten abweichen, ist nicht erkennbar.

Andererseits wäre bei Experten ein Verständnis des abgebildeten Wissens wünschenswert. So besteht die Möglichkeit, ein aus Beispielen gelerntes Netz zu verändern, dadurch, dass das kausale Netz editiert wird oder die Lernmenge verändert wird. Dies ist aber nur möglich, wenn ein Experte die Zusammenhänge explorieren und verifizieren kann.

Eine Exploration der Zusammenhänge kann erfolgen, indem verschiedene Ereignisse als eingetreten angenommen werden und die berechneten, tabellarisch ausgegebenen Wahrscheinlichkeiten verglichen werden. Da diese Berechnungen für Systeme, die kausale Netze verwenden, getrennt von der graphischen Struktur erfolgen, sind Erkenntnisse über die Zusammenhänge schwer zu erlangen.

Es ist jedoch bekannt, das gesamte gelernte kausale Netz BAN als Graph, annotiert mit den Wahrscheinlichkeitsverteilungen oder -tabellen zu visualisieren. Diesen Umstand macht sich die vorliegende Erfindung zunutze. Mit dem Lernverfahren sollen insbesondere solche kausalen Netze gelernt werden, die viele Ereignisse und komplexe Zusammenhänge darstellen. Andernfalls wäre es für einen Fachexperten leicht möglich, das kausale Netz selbst aufzustellen. Die Auswirkungen eines eintretenden Ereignisses, repräsentiert durch einen Knoten N auf ein anderes Ereignis, repräsentiert durch einen anderen Knoten N, in dem komplexen kausalen Netz sind aber nicht direkt ersichtlich. Zum einen können die Knoten N weit voneinander entfernt und nur über einen unübersichtlichen Weg miteinander verbunden sein. Zum anderen sind die Regeln, nach denen festzustellen ist, ob zwei Knoten in einem kausalen Netz abhängig oder unabhängig sind, nicht intuitiv bzw. sichtbar.

In einem kausalen Netz gilt: zwei Knoten N bzw. Variablen X und Y heißen d-verbunden, d.h. abhängig, unter den aktuell beobachteten Ausprägungen von anderen Variablen, wenn es einen Pfad von einem Knoten A zu einem Knoten B gibt, für den gilt:
- der Pfad enthält keine serielle oder divergierende Verbindung, bei der der Zustand des mittleren Knotens (Ausprägung der Variablen) unter den beobachteten ist;
- für die mittleren Knoten bzw. Variablen aller konvergierenden Verbindungen des Pfads liegt eine Beobachtung vor, entweder indem der Zustand des Knotens beobachtet wurde oder indem der Zustand einer seiner Nachfolgerknoten beobachtet wurde;
- dabei bezeichnet in einem kausalen Netz A -> B -> C eine serielle Verbindung, A -> B <- C eine konvergierende Verbindung und A <- B -> C eine divergierende Verbindung.

Gibt es keinen solchen Pfad, heißen die Variablen X und Y d-separiert, d.h. unabhängig, unter den aktuell beobachteten Ausprägungen von anderen Variablen.

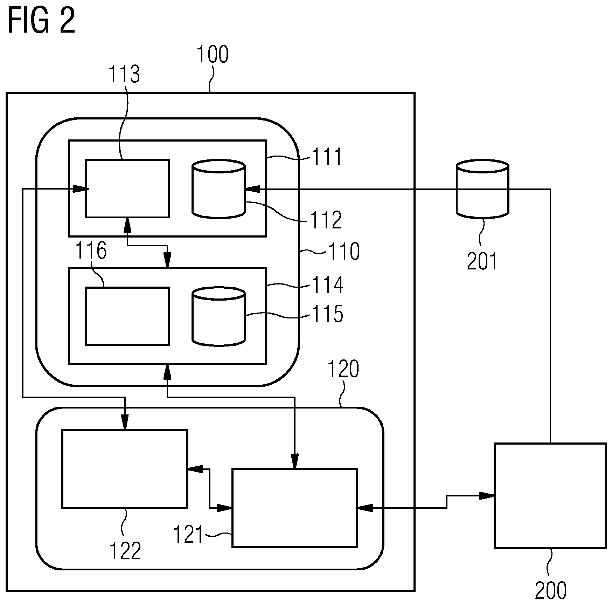

Die oben gemachten Erläuterungen gelten für das beispielhaft in Fig. 1 gezeigte trainierte kausale Netz BAN, das als Graph mit den Knoten N und den Kanten K mit einer die Abhängigkeit beschreibenden Richtungsangabe durch Pfeile dargestellt ist. Das kausale Netz BAN kann durch ein prinzipiell bekanntes Lern- und Inferenzsystem 110 eines Rechners 100 erzeugt und z.B. auf einem Client-Rechner 200 visualisiert werden. Das Lern- und Inferenzsystem 110 ist Bestandteil eines erfindungsgemäßen Assistenzsystems, dessen Komponenten in Fig. 2 schematisch dargestellt sind.

Das Assistenzsystem 100 umfasst den bereits erwähnten Rechner 100, der z.B. einen Server eines Rechnernetzwerkes darstellen kann. Der Rechner 100 umfasst neben dem bereits erwähnten Lern- und Inferenzsystem 110 ein Explorations- und Modifikationssystem 120, welche die nachfolgend beschriebene Interaktion zur Analyse des trainierten kausalen Netzes BAN ermöglicht. Das Lern- und Inferenzsystem 110 umfasst eine Trainingskomponente oder -einheit 111 sowie eine Datenbank 112 mit Lerndaten und dem gelernten kausalen Netz BAN. Die Trainingskomponente bzw. -einheit 111 mit den Daten der beobachteten Ereignisse dient zum Lernen des kausalen Netzes BAN. Weiterer Bestandteil des Lern- und Inferenzsystems 110 ist eine Inferenzkomponente oder -einheit 114, die eine Datenbank 115 mit aktuellen Daten und ggf. modifiziertem kausalen Netz BAN sowie eine Recheneinheit 116 umfasst, wobei die aktuellen Daten durch eine Nutzereingabe ausgewählte Knoten durch Setzen von Evidenzen sind. Die Inferenzkomponente bzw. -einheit 114 mit den Daten zu aktuell beobachteten Ereignissen dient in einer dem Fachmann bekannte Weise zur Berechnung von Wahrscheinlichkeiten von weiteren Ereignissen. Die Nutzereingabe erfolgt z.B. an dem Client-Rechner 200.

Das Explorations- und Modifikationssystem 120 umfasst eine Visualisierungseinheit 121, welche dazu dient, die durch das Auswählen von Knoten durch das Setzen einer Anzahl an Evidenzen sich ergebenden Veränderungen in dem kausalen Netz BAN zu visualisieren. Ferner umfasst das Explorations- und Modifikationssystem 120 eine Modifikationskomponente oder -einheit 122, mit dessen Hilfe eine Veränderung der Anzahl an Kanten K durch Hinzufügen oder Entfernen vornehmbar ist. Durch eine Interaktion mit der Recheneinheit zum Trainieren des kausalen Netzes BAN kann die sich dadurch ergebende Veränderung in den Wahrscheinlichkeitstabellen neu erlernt werden.

Der bereits erwähnte Client-Rechner 200 ermöglicht es einerseits, mit der Visualisierungseinheit 121 des Explorations- und Modifikationssystems 120 zu kommunizieren, indem die an dem Client-Rechner 200 vorgenommenen Nutzereingaben an die Visualisierungseinheit 121 übertragen werden. Die Visualisierungseinheit 121 kommuniziert seinerseits mit der Inferenzeinheit 114, die die durch die Nutzereingabe vorgenommene Selektion der Knoten verarbeitet, indem diejenigen Knoten ermittelt werden, deren Wahrscheinlichkeit des Eintretens eines Ereignisses sich durch die Anzahl an gesetzten Evidenzen und/oder die Veränderung der Anzahl an Kanten K sich verändert. Eine Interaktion der Inferenzkomponente bzw. -einheit 114 mit der Recheneinheit 113 ermöglicht dann die erneute graphische Darstellung auf dem Client-Rechner 200.

Schließlich ist eine Datenbank 201 mit neuen Lerndaten vorgesehen, welche es ermöglicht, über den Client-Rechner 200 zu der Datenbank 112 mit den Lerndaten neue Lerndaten hinzuzufügen, um die sich daraus ergebenden Veränderungen an dem kausalen Netz BAN zu ermitteln und zu visualisieren.

Das vorgeschlagene Assistenzsystem ergänzt damit ein System zum Lernen und Anwenden eines kausalen Netzes um ein Explorationssystem zur Plausibilisierung des gelernten kausalen Netzes BAN und um ein Modifikationssystem zur Veränderung des gelernten kausalen Netzes BAN.

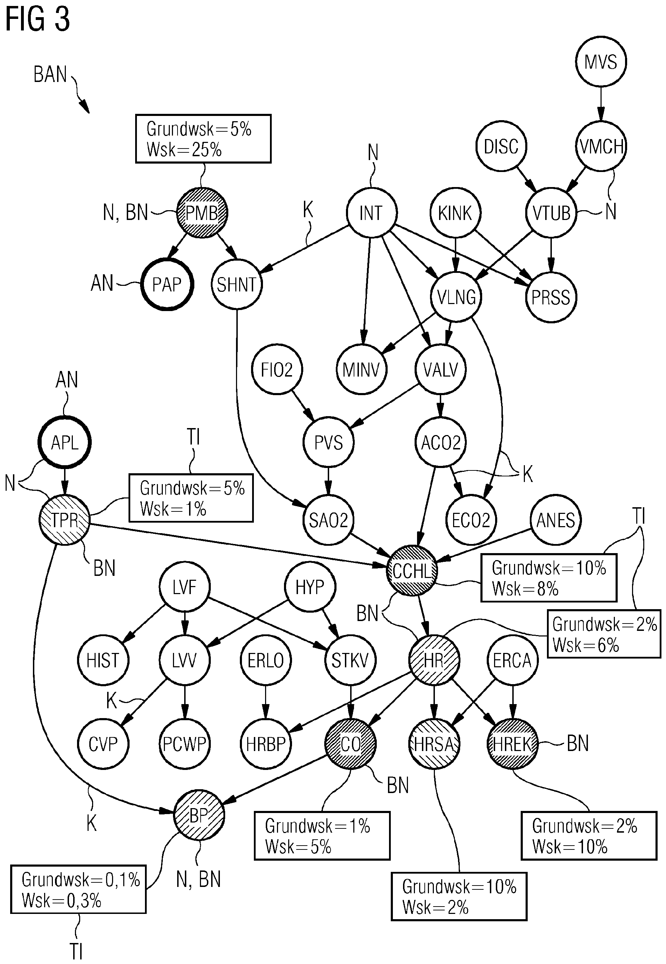

Das Explorations- und Modifikationssystem 120 ermöglicht mittels der Visualisierungskomponente bzw. -einheit 121 die Darstellung des kausalen Netzes mit Konfigurationsmöglichkeiten. Beispielsweise kann der Ausschnitt des gezeigten kausalen Netzes BAN durch einen Nutzer ausgewählt werden. Das kausale Netz wird dabei, wie in Fig. 6 dargestellt, durch Knoten N und Pfeile K als Kanten in Gestalt eines Graphen dargestellt. Fig. 6 zeigt einen Ausschnitt, der beispielhaft durch eine Nutzereingabe aus dem in Fig. 1 gezeigten kausalen Netz BAN ausgewählt wurde. Durch Anklicken einzelner Knoten N können die Knoten N als beobachtet (Evidenz) markiert werden. Diese Knoten N werden als ausgewählte Knoten AN bezeichnet. In Fig. 3, welche wiederum das in Fig. 1 bereits gezeigte kausale Netz BAN darstellt, sind die Knoten, die die Ereignisnamen PAP und APL tragen, ausgewählte Knoten AN. Diese sind z.B. durch einen dicken Rand hervorgehoben markiert.

Jeder andere Knoten N, dessen Wahrscheinlichkeit durch diese Evidenz verändert wird, wird durch die Neuberechnung der Wahrscheinlichkeiten durch die Inferenzkomponente bzw. - einheit 114 hervorgehoben, insbesondere farblich, markiert. Im vorliegenden Ausführungsbeispiel sind dies sog. betroffene Knoten BN, welche die Namen PMB, TPR, CCHL, HR, HRSA, HREK, CO und BP tragen. Die Farbcodierung ist frei konfigurierbar. Sie kann sich nach der Höhe der (veränderten) Wahrscheinlichkeit richten oder nach der Höhe der Änderung der durch die Inferenzkomponente 114 ermittelten Wahrscheinlichkeit.

Ein farblich markierter betroffener Knoten BN erhält zudem eine Textinformation TI zur Höhe von Wahrscheinlichkeiten. Angegeben sind eine Basis- oder Grundwahrscheinlichkeit Grundwsk sowie eine neuberechnete Wahrscheinlichkeit Wsk. Optional kann ein Unterschied zwischen den beiden Wahrscheinlichkeiten, der sich aus der Differenz ergibt, in der Textinformation TI enthalten sein. In Fig. 3 sind die jeweiligen Textinformationen TI zu sämtlichen betroffenen Knoten BN dargestellt. Beispielsweise umfasst der betroffene Knoten TPR die Basis oder Grundwahrscheinlichkeit Grundwsk = 5 % und die Wahrscheinlichkeit Wsk = 1 %. Die farbliche Markierung der betroffenen Knoten BN kann einen Anhaltspunkt für die Höhe der Veränderung geben. Die Basis- oder Grundwahrscheinlichkeit Grundwsk ist die Wahrscheinlichkeit Wsk, wenn kein anderes Ereignis eintritt (d.h. kein anderer Knoten ausgewählt ist), das die Wahrscheinlichkeit dieses Knotens beeinflusst. Mit anderen Worten ist die Wahrscheinlichkeit für das Eintreten dieses Knotens die Wahrscheinlichkeit Wsk, wenn keine Information über ein Ereignis vorliegt. Die farbliche Markierung kann einen Anhaltspunkt über die Höhe der Veränderung, d.h. den Absolutwert der Differenz zwischen der Basis- oder Grundwahrscheinlichkeit Grundwsk und der Wahrscheinlichkeit Wsk, geben.

Mit Hilfe der Modifikationseinheit 122 können darüber hinaus Kanten zwischen zwei Knoten N gelöscht oder hinzugefügt werden, sofern dadurch keine Zyklen in dem kausalen Netz BAN entstehen. Dies ist beispielsweise in Fig. 6 dargestellt, indem eine neue Kante VK zwischen den Knoten N mit den Variablen/Namen VMCH und PRSS dargestellt ist. Neue Wahrscheinlichkeitstabellen für die Knoten, die durch das Hinzufügen der neuen Kante VK entstehen, können mit Hilfe der Inferenzeinheit 114 ermittelt werden. Hieraus betroffene Knoten werden dann wiederum durch die Visualisierungskomponente bzw. -einheit 121 ermittelt.

Die Aufgabe der Inferenzkomponente 114 besteht somit darin, die Auswirkungen des Setzens einer weiteren Evidenz (d.h. des Beobachtens eines Ereignisses) auf die Wahrscheinlichkeiten des Eintretens anderer Ereignisse zu berechnen. Hier kann der gleiche Algorithmus zur Anwendung gelangen, wie dieser herkömmlich verwendet wird, z.B. eine Monte Carlo-Simulation mit einer Likelihood Weighting zur Inferenz auf Basis des kausalen Netzes BAN verwendet werden, der auch bei der Bestimmung von Wahrscheinlichkeiten für Ereignisse unter Berücksichtigung einer Menge von beobachteten Ereignissen eingesetzt wird.

Die Visualisierungskomponente bzw. -einheit 121 ermöglicht darüber hinaus die Markierung zweier Knoten als interessanter Zusammenhang, wodurch es ermöglicht wird, die Daten anzuzeigen, die zum Hinzufügen der Kante zwischen den beiden Knoten geführt haben. Unter Daten sind dabei die zum Trainieren des kausalen Netzes BAN verwendeten Daten zu verstehen. Diese Daten können solche Daten umfassen, die einen Zusammenhang zwischen der Anzahl an ausgewählten Knoten aufweisen.

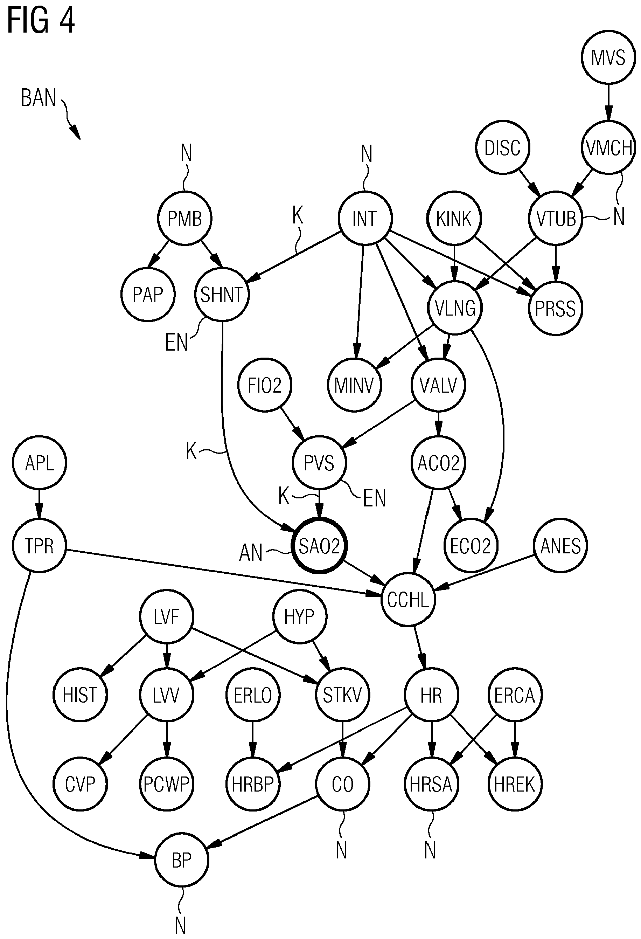

Fig. 4 zeigt wiederum das in Fig. 1 bereits dargestellte kausale Netz BAN, in dem der Knoten SAO2 ein ausgewählter Knoten AN ist. In Fig. 5 ist die sich für den Knoten AN ergebende Wahrscheinlichkeitstabelle dargestellt. Es wird angenommen, dass der Knoten AN mit dem Namen SAO2 zwei Ausprägungen T (SAO2 = T) und F (SAO2 = F) aufweisen kann. Wie aus Fig. 4 ersichtlich ist, weist der ausgewählte Knoten AN zwei Elternknoten SHNT und PVS auf. In den Zeilen der Tabelle in Fig. 5 sind die Zustände der Elternknoten sowie die für die zwei Ausprägungen sich ergebenden Wahrscheinlichkeiten angegeben, wobei in diesem Beispiel davon ausgegangen wird, dass die Elternknoten SHNT und PVS ebenfalls die zwei Ausprägungen SHNT = T und SHNT = F bzw. PVS = T und PVS = F aufweisen kann. Für die unterschiedlichen Kombinationen ergeben sich die in Fig. 5 gezeigten Wahrscheinlichkeiten.

Das oben beschriebene Assistenzsystem, in dem die Inferenz und Visualisierung von kausalen Netzen genutzt wird, ermöglicht es, Wissen, das in den gesammelten Ereignissen steckt, durch Expertenwissen zu verifizieren, zu verbessern und zu erweitern. Mit Hilfe des Explorationssystems lassen sich die gelernten Zusammenhänge zwischen Ereignissen auch in komplexen Netzen erforschen. Damit besteht die Möglichkeit, gelernte Zusammenhänge zu erkennen. Bei bekannter Bedeutung der Ereignisse kann ein Zusammenhang für folgende Möglichkeiten beurteilt werden:
Es kann sich um einen bereits bekannten Zusammenhang handeln. Dieser kann durch einen Experten auch ohne kausales Netzwerk bisher berücksichtigt worden sein. Es ist möglich, dass es sich um einen unbekannten Zusammenhang handelt, der möglicherweise nicht häufig auftaucht, aber einer fachlichen Prüfung standhält, weil es ursächliche Zusammenhänge gibt. Es kann aber auch ein Zusammenhang gelernt worden sein, der einem Fachexperten nicht erklärlich ist. In diesem Fall kann eine weitere Prüfung notwendig sein. Mit Hilfe des Assistenzsystems können die Daten identifiziert werden, aus denen der Zusammenhang gelernt wurde. Durch die konkrete Zusammenstellung dieser Daten wird dem Experten die Möglichkeit gegeben, zu beurteilen, ob die Daten auf eine Weise gesammelt wurden, die einen "Bias", also eine Richtung bzw. Beeinflussung in das Lernverfahren, einführt. Dies bedeutet, die Daten sind dann nicht repräsentativ, sondern spiegeln aufgrund einer bestimmten Auswahl einen Zusammenhang wieder, der in der Allgemeinheit so nicht existiert. Wird dieser Zusammenhang festgestellt, kann die Auswahl der Lerndaten geändert werden. Hierzu können Lerndaten über die Datenbank 201 in den Rechner 100 und das Lern- und Inferenzsystem 110 eingebracht werden. Ein Zusammenhang kann auch manuell aus dem aktuellen kausalen Netz BAN entfernt werden, indem eine Kante entfernt wird. Die Beurteilung des Experten kann abgespeichert werden und für ein neu gelerntes Netz einem Experten wieder vorgelegt werden.

Es ist ferner möglich, dass ein Experte erkennt, dass aus den Beispielen bestimmte Zusammenhänge nicht hervorgehen, obwohl sie technisch gegeben sind. In diesem Fall ist eine kritische Prüfung der Lerndaten erforderlich. Zusammenhänge können manuell in das kausale Netz eingepflegt werden und als Beurteilung abgespeichert werden. Dies erfolgt wiederum mittels der Datenbank 201. Eine weitere mögliche Erkenntnis bei der Exploration des Netzes ist, dass die Granularität der Ereignisse nicht günstig gewählt ist. Am Beispiel der Alarmmeldungen kann dies bedeuten, dass Alarme zu Klassen zusammengefasst oder Untergruppen gebildet werden sollten.

Die Inferenzkomponente kann dazu verwendet werden, um Auswirkungen der Modifikationsvorschläge des Experten auf das kausale Netz zu berechnen.

Das beschriebene Assistenzsystem und ein entsprechendes Verfahren gemäß der vorliegenden Anmeldung können beispielsweise mittels eines Prozessleitsystems oder vorteilhaft in einer Software-Umgebung einer Cloud-basierten Anlagenüberwachung implementiert werden. Daten aus einer Kundenanlage werden beispielsweise mit Hilfe von Software-Agenten gesammelt, und an ein Service Operation Center geschickt, in welchem sie auf einem Service-Rechner abgespeichert werden. Diese Daten können nun als Eingangsdaten für das zu trainierende kausale Netz (BAN) verwendet werden. Ein technischer Experte kann die Ausgangsdaten des kausalen Netzes mittels des Assistenzsystems gemäß seinem Branchenwissen optimieren, wobei das Assistenzsystem vorteilhaft in Form einer Software-Applikation ausgebildet sein kann. Die Ergebnisse der Optimierung können auf einem Monitor des Service-Rechners angezeigt und/oder auf einer Webseite bereitgestellt werden, so dass sie vom Endkunden, das heißt dem Bediener der automatisierten prozesstechnischen Anlage, zum Beispiel in einem Browser betrachtet werden können.

Mit Hilfe des vorgeschlagenen Explorations- und Modifikationssystems des Rechners 100 wird das Vertrauen in das kausale Netz verbessert und damit der Einsatz zum Teil überhaupt erst ermöglicht. Grenzen des kausalen Netzes können erforscht werden. Weiterhin ist eine Verbesserung des kausalen Netzes durch manuelle Änderungen aufgrund durch Hinterfragung von gelernten Zusammenhängen und Aufdecken von bekannten Zusammenhängen oder als nichtvorhanden erkannten Zusammenhängen möglich. Ein weiterer Vorteil ist die Unterstützung der Weiterentwicklung des Lernverfahrens und die Verbesserung der Datenauswahl zum Lernen.

### Referenzen

[1] http://www.bnlearn.com/documentation/man/alarm.html

## Patentansprüche

1. Assistenzsystem zur Analyse eines trainierten kausalen Netzes (BAN), in dem Knoten (N) Variablen, die ein Ereignis repräsentieren, und Kanten (K) bedingte Abhängigkeiten zwischen den Variablen beschreiben, wobei jedem Knoten (N) des Netzes eine bedingte Wahrscheinlichkeitsverteilung der durch ihn repräsentierten Variable, die Variablen an Elternknoten (EN) zuordnet, zugeordnet ist, wobei Elternknoten (EN) eines Knotens (N) diejenigen Knoten (N) sind, von denen eine Kante (K) zu diesem Knoten (N) führt, wobei das Assistenzsystem eine interaktive Visualisierungskomponente (120) umfasst, die dazu ausgebildet ist,
- das kausale Netz (BAN) auf einer Ausgabeeinheit als Graph mit den Knoten (N) und den Kanten (K) mit einer die Abhängigkeit beschreibenden Richtungsangabe darzustellen;
- in Reaktion auf eine Nutzereingabe, mit der eine Anzahl an Knoten (N) durch das Setzen einer Anzahl an Evidenzen ausgewählt und/oder eine Anzahl an Kanten (K) durch Hinzufügen oder Entfernen verändert wird, die Darstellung des kausalen Netzes (BAN) derart verändert wird, dass der oder die Knoten (N), deren Wahrscheinlichkeit des Eintretens eines Ereignisses sich durch die Anzahl an gesetzten Evidenzen und/oder die Veränderung der Anzahl an Kanten (K) verändert, als betroffene Knoten (BN) visuell hervorgehoben dargestellt wird.

2. Assistenzsystem nach Anspruch 1, **dadurch gekennzeichnet, dass** dieses eine Inferenzkomponente (113) umfasst, die dazu ausgebildet ist, die Auswirkungen des Setzens einer Anzahl an Evidenzen auf die Wahrscheinlichkeiten des Eintretens anderer Ereignisse, zu ermitteln.

3. Assistenzsystem nach Anspruch 1 oder 2, **dadurch gekennzeichnet, dass** die visuell hervorgehobene Darstellung eine farbliche Markierung des oder der betroffenen Knoten (BN) umfasst, wobei die farbliche Markierung abhängig ist von einem Absolutwert der Höhe der Wahrscheinlichkeit oder von der Höhe der Änderung der Wahrscheinlichkeit des betroffenen Knotens (BN) .

4. Assistenzsystem nach einem der vorhergehenden Ansprüche, **dadurch gekennzeichnet, dass** die visuell hervorgehobene Darstellung des oder der betroffenen Knoten (BN) eine Textinformation (TI) zur Höhe der Wahrscheinlichkeit der betreffenden Variablen des betroffenen Knotens (BN) umfasst.

5. Assistenzsystem nach einem der vorhergehenden Ansprüche, **dadurch gekennzeichnet, dass** die Wahrscheinlichkeit eine Basiswahrscheinlichkeit (Grundwsk), eine neu berechnete Wahrscheinlichkeit (Wsk) und eine Unterschiedswahrscheinlichkeit (Delta), die sich aus einer Differenz zwischen der neu berechneten Wahrscheinlichkeit (Wsk) und der Basiswahrscheinlichkeit (Grundwsk) ergibt, umfasst.

6. Assistenzsystem nach einem der vorhergehenden Ansprüche, **dadurch gekennzeichnet, dass** die interaktive Visualisierungskomponente (120) dazu ausgebildet ist, in Reaktion auf eine Nutzereingabe, mit der eine Anzahl an Knoten (N) durch das Setzen einer Anzahl an Evidenzen ausgewählt wird, die zum Lernen des kausalen Netzes (BAN) verwendeten Daten darzustellen.

7. Assistenzsystem nach Anspruch 6, **dadurch gekennzeichnet, dass** die interaktive Visualisierungskomponente (120) dazu ausgebildet ist, die Daten, die beim Lernen des kausalen Netzes (BAN) zum Hinzufügen von Kanten (K) zwischen der Anzahl an ausgewählten Knoten (AN) geführt haben, darzustellen.

8. Assistenzsystem nach Anspruch 6 oder 7, **dadurch gekennzeichnet, dass** die Daten solche Daten umfassen, die einen Zusammenhang zwischen der Anzahl an ausgewählten Knoten (AN) aufweisen.

9. Assistenzsystem nach einem der vorhergehenden Ansprüche, **dadurch gekennzeichnet, dass** die interaktive Visualisierungskomponente (120) dazu ausgebildet ist, in Reaktion auf eine Nutzereingabe einen Ausschnitt des kausalen Netzes (BAN) auf der Ausgabeeinheit darzustellen.

10. Assistenzsystem nach einem der vorhergehenden Ansprüche, **dadurch gekennzeichnet, dass** die die Abhängigkeit beschreibende Richtungsangabe durch einen Pfeil visualisiert wird, wobei ein Pfeilende an einem Elternknoten (EN) und eine Pfeilspitze an dem Knoten (N) endet, zu dem die von dem Elternknoten (EN) ausgehende Kante (K) führt.

11. Verfahren zur computer-implementierten Analyse eines trainierten kausalen Netzes (BAN), in dem Knoten (N) Variablen, die ein Ereignis repräsentieren, und Kanten (K) bedingte Abhängigkeiten zwischen den Variablen beschreiben, wobei jedem Knoten (N) des Netzes eine bedingte Wahrscheinlichkeitsverteilung der durch ihn repräsentierten Variable, die Variablen an Elternknoten (EN) zuordnet, zugeordnet ist, wobei Elternknoten (EN) eines Knotens (N) diejenigen Knoten (N) sind, von denen eine Kante (K) zu dem Knoten (N) führt, wobei das Verfahren die folgenden Schritte umfasst:
- Darstellen des kausalen Netzes (BAN) auf einer Ausgabeeinheit als Graph mit den Knoten (N) und den Kanten (K) mit einer die Abhängigkeit beschreibenden Richtungsangabe;
- Veränderung der Darstellung des kausalen Netzes (BAN) in Reaktion auf eine Nutzereingabe, mit der eine Anzahl an Knoten (N) durch das Setzen einer Anzahl an Evidenzen ausgewählt und/oder eine Anzahl an Kanten (K) durch Hinzufügen oder Entfernen verändert wird, derart, dass der oder die Knoten (N), deren Wahrscheinlichkeit des Eintretens eines Ereignisses sich durch die Anzahl an gesetzten Evidenzen und/oder die Veränderung der Anzahl an Kanten (K) verändert, als betroffene Knoten (BN) visuell hervorgehoben dargestellt wird.

12. Computerprogrammprodukt, das direkt in den internen Speicher eines digitalen Rechners (100, 200) geladen werden kann und Softwarecodeabschnitte umfasst, mit denen die Schritte gemäß Anspruch 11 ausgeführt werden, wenn das Produkt auf dem Rechner (100, 200) läuft.
